# EUROPEAN PATENT SPECIFICATION

(11) **EP 2 586 784 B1**
(45) Date of publication and mention of the grant of the patent: **09.12.2015**
(21) Application number: 11797805.6
(22) Date of filing: 17.06.2011
(51) Int. Cl.: C07F 7/18

(54) **METHOD FOR PRODUCING ALKOXY HYDROSILANE**
VERFAHREN ZUR HERSTELLUNG VON ALKOXYHYDROSILAN
PROCÉDÉ DE FABRICATION D'ALCOXY HYDROSILANE

(30) Priority: 22.06.2010 JP 2010141700
(43) Date of publication of application: 01.05.2013
(73) Proprietor: Kaneka Corporation, Osaka-shi, Osaka 530-8288 (JP)
(72) Inventor: WAKABAYASHI, Katsuyu, Takasago-shi Hyogo 676-0027 (JP)
(74) Representative: Hoffmann Eitle
(86) International application number: PCT/JP2011/003465
(87) International publication number: WO 2011/161916

(56) References cited:
- EP-A1- 2 386 561
- WO-A1-2010/004948
- US-A1- 2009 247 712
- PESTUNOVICH V.A. ET AL.: 'Pentacoordinate hydrochlorosilanes with lactamomethyl ligand' JOURNAL OF ORGANOMETALLIC CHEMISTRY vol. 692, no. 11, 2007, pages 2160 - 2167, XP022022456

## Description

### TECHNICAL FIELD

The present invention relates to a method for producing an organoalkoxyhydrosilane containing a hetero substituent at the α-position to the silicon.

### BACKGROUND ART

Alkoxyhydrosilanes (A) represented by formula (3):

H-SiR²_{c}(CR¹_{3-b}Y_{b})ₐ(OR⁸)_{3-a-c} (3)

in which R¹, R², R⁸, Y, a, b and c are as defined below are distinctive silane compounds characterized by bearing, on the silicon, an alkoxy group, a hydro group, and a hydrocarbon group containing a hetero substituent at the α-position (hereinafter, this hydrocarbon group may also be referred to as a heteromethyl group). Examples of usual methods for producing an alkoxysilane compound include those in which a corresponding chlorosilane is reacted with an alcohol. In the case of a silane compound containing an Si-H group, however, there is a problem that alkoxylation of the hydrosilyl group is likely to occur as a side reaction. Particularly in the case of the silane compound containing a heteromethyl group to be produced in the present invention, the side reaction is more likely to occur. Patent Literature 1 and 2 discloses a method in which an orthoester is used in place of the alcohol to produce that silane compound efficiently. Pestunovich et al. have discussed the synthesis and reaction behavior of pentacoordinate hydrochlorsilanes LCH₂SiRHCl (L=2-piperidonyl ligand, R = ME, Ph, Bn) in "Pentacoordinate hydrochlorosilanes with lactamomethyl ligand", Journal of Organometallic Chemistry, 2007, Vol. 692, No. 11, p. 2160-2167.

### CITATION LIST

### PATENT LITERATURE

Patent Literature 1: WO 2010/004948
Patent Literature 2: EP 2 386 561 A1

### SUMMARY OF INVENTION

### TECHNICAL PROBLEM

Claims and Examples in Patent Literature 1 describe that chloromethyldimethoxysilane can be efficiently obtained by reacting chloromethyldichlorosilane with trimethyl orthoformate. This is an exothermic reaction, and methyl chloride and methyl formate are generated as by-products in equimolar amounts to the amount of Si-Cl. Thus, when the reaction is performed on a large scale, the control of the reaction temperature and the adjustment of the amount of evolved gas are important to safety. To address that problem, generally, the addition rate of the reactant is reduced, for example. However, the present inventors have found that decreasing the addition rate of trimethyl orthoformate in the above production method rather makes the alkoxylation of an Si-H group as a side reaction more likely. The present invention aims to provide an industrially feasible method for producing a heteromethyl group-containing alkoxyhydrosilane.

### SOLUTION TO PROBLEM

As a result of extensive investigations to solve the problems, the present inventors have completed the invention described below.

Specifically, the present invention relates to the following (I) to (IX).
(I) A method for producing an alkoxyhydrosilane (A), comprising
   a reaction of a halohydrosilane (B) represented by formula (1):

   H-SiR²_{c}(CR¹_{3-b}Y_{b})ₐX_{3-a-c} (1)

   wherein each R¹ is independently a hydrogen atom or substituted or unsubstituted C₁₋₂₀ hydrocarbon group; each R² is independently a substituted or unsubstituted C₁₋₂₀ hydrocarbon group; each X is independently a halogen atom; Y is selected from a halogen atom, -OR³, -NR⁴R⁵, -N=R⁶, -SR⁷ (wherein R³, R⁴, R⁵, and R⁷ are each a hydrogen atom or C₁₋₂₀ substituted or unsubstituted hydrocarbon group, and R⁶ is a divalent C₁₋₂₀ substituted or unsubstituted hydrocarbon group), a C₁₋₂₀ perfluoroalkyl group, and a cyano group; a is 1 or 2, b is 1, 2 or 3, and c is 1 or 0, provided that a+c is not more than 2,
   with an orthoester (C) represented by formula (2)

   R⁹-C-(OR⁸)₃ (2)

   wherein R⁸s are substituted or unsubstituted C₁₋₂₀ hydrocarbon groups, and R⁹ is hydrogen or a substituted or unsubstituted hydrocarbon group, at a molar ratio of the orthoester (C) to Xs of the halohydrosilane (B) of constantly not less than 1, to produce the alkoxyhydrosilane (A) represented by formula (3):

   H-SiR²_{c}(CR¹_{3-b}Y_{b})ₐ(OR⁸)_{3-a-c} (3)

   wherein R¹, R², R⁸, Y, a, b, and c are as defined above,
   and wherein the halohydrosilane (B) is added to the orthoester (C).
(II) The method for producing the silane compound according to (I),
   wherein X is a chloro group.
(III) The method for producing the silane compound according to (I) or (II),
   wherein Y is a halogen atom.
(IV) The method for producing the silane compound according to (I) or (II),
   wherein the halohydrosilane (B) is chloromethyldichlorosilane (ClCH₂SiCl₂H).
(V) The method for producing the silane compound according to (I) or (II),
   wherein Y is an alkoxy group (-OR³).
(VI) The method for producing the silane compound according to (V),
   wherein R³ is a substituted or unsubstituted C₁₋₅ hydrocarbon group.
(VII) The method for producing the silane compound according to (V),
   wherein Y is a methoxy group.
(VIII) The method for producing the silane compound according to any one of (I) to (VII),
   wherein R⁹ of the orthoester (C) is hydrogen or a methyl group.

### ADVANTAGEOUS EFFECTS OF INVENTION

The method for producing a silane compound according to the present invention enables to produce an α-heterosubstituted alkyl-alkoxyhydrosilane safely and efficiently.

### DESCRIPTION OF EMBODIMENTS

In the following, the present invention is described in detail.

The present invention relates to a method for producing an alkoxyhydrosilane compound (A) represented by formula (3):

H-SiR²_{c}(CR¹_{3-b}Y_{b})ₐ(OR⁸)_{3-a-c} (3)

wherein each R¹ is independently a hydrogen atom or substituted or unsubstituted C₁₋₂₀ hydrocarbon group; each R² is independently a substituted or unsubstituted C₁₋₂₀ hydrocarbon group; R⁸ is a substituted or unsubstituted C₁₋₂₀ hydrocarbon group; Y is selected from a halogen atom, - OR³, -NR⁴R⁵, -N=R⁶, -SR⁷ (wherein R³, R⁴, R⁵, and R⁷ are each a hydrogen atom or C₁₋₂₀ substituted or unsubstituted hydrocarbon group, and R⁶ is a divalent C₁₋₂₀ substituted or unsubstituted hydrocarbon group), a C₁₋₂₀ perfluoroalkyl group, and a cyano group (hereinafter, these are also referred to collectively as hetero substituents); a is 1 or 2, b is 1, 2 or 3, and c is 1 or 2, provided that a+c is not more than 2.

Specific examples of Y include, but not limited to, halogen substituents such as fluorine, chlorine, bromine, and iodine, alkoxy groups such as a methoxy group, an ethoxy group, a propoxy group, an isopropenyloxy group, and a phenoxy group, nitrogenous substituents such as a dimethylamino group, a diethylamino group, a 1-piperidino group, a methylethylketimino group, and a methylisobutylketimino group, sulfurous substituents such as a mercapto group, a methylthio group, and a phenylthio group, perfluoroalkyl groups such as a trifluoromethyl group and a pentafluoroethyl group, and a cyano group. Especially from the viewpoint of ease of synthesis, halogen substituents, alkoxy groups, and nitrogenous substituents are preferred, halogen substituents and alkoxy groups are more preferred, and a chloro group and a methoxy group are particularly preferred.

Specific examples of the substituent R¹ include, but not limited to, a hydrogen atom, a methyl group, an ethyl group, a propyl group, a vinyl group, and a phenyl group. Among these, a hydrogen atom is preferred because of the less steric hindrance effect and of easy availability.

Specific examples of the substituent R² include, but not limited to, a methyl group, an ethyl group, a propyl group, a vinyl group, an isopropenyl group, and a phenyl group. Among these, a methyl group is preferred because of the less steric hindrance effect and of easy availability.

Specific examples of the substituent R⁸ include, but not limited to, a methyl group, an ethyl group, a propyl group, a vinyl group, an isopropenyl group, and a phenyl group. Among these, a methyl group is preferred because the corresponding alkoxy group has high hydrolyzability. An ethyl group and an isopropenyl group are also preferred because hydrolysis of the corresponding alkoxy groups produces as a by-product ethanol and acetone, respectively, which have less impact on environment.

"a" is 1 or 2, and is preferably 1 from the viewpoint of availability.

"b" is 1, 2, or 3, and is preferably 1 from the viewpoint of ease of introduction.

"c" is 0 or 1, and is preferably 0 from the viewpoint of availability.

Specific examples of the alkoxyhydrosilane (A) to be obtained by the method for producing a silane compound according to the present invention include, but are not limited to, chloromethyldimethoxysilane (HSi (CH₂Cl) (OCH₃)₂), chloromethyldiethoxysilane (HSi (CH₂Cl) (OC₂H₅)₂), chloromethyldiisopropenoxysilane (HSi(CH₂Cl) (OC(CH₃)=CH₂)₂), dichloromethyldimethoxysilane (HSi(CHCl₂)(OCH₃)₂), trichloromethyldimethoxysilane (HSi(CCl₃)(OCH₃)₂), chloromethylmethoxymethylsilane (HSi (CH₂Cl) (OCH₃) (CH₃)), bis(chloromethyl)methoxysilane (HSi(CH₂Cl)₂(OCH₃)), 1-chloroethyldimethoxysilane (HSi(CH₂ClCH₃)(OCH₃)₂), fluoromethyldimethoxysilane (HSi(CH₂F)(OCH₃)₂), bromomethyldimethoxysilane (HSi(CH₂Br)(OCH₃)₂), iodomethyldimethoxysilane (HSi(CH₂I)(OCH₃)₂), 1-bromobenzyldimethoxysilane (HSi(CHBrC₆H₅)(OCH₃)₂), methoxymethyldimethoxysilane (HSi(CH₂OCH₃)(OCH₃)₂), ethoxymethyldimethoxysilane (HSi(CH₂OC₂H₅)(OCH₃)₂), 1-methoxyethyldimethoxysilane (HSi(CH(OCH₃)CH₃)(OCH₃)₂), N,N-diethylaminomethyldimethoxysilane (HSi(CH₂N(C₂H₅)₂)(OCH₃)₂), piperidinomethyldimethoxysilane (HSi(CH₂N(CH₂)₅)(OCH₃)₂), and mercaptomethyldimethoxysilane (HSi(CH₂SH)(OCH₃)₂). From the viewpoint of usefulness of the silane, chloromethyldimethoxysilane, chloromethyldiethoxysilane, chloromethyldiisopropenoxysilane, chloromethylmethoxymethylsilane, bis(chloromethyl)methoxysilane, 1-chloroethyldimethoxysilane, and methoxymethyldimethoxysilane are preferred, and chloromethyldimethoxysilane, chloromethyldiethoxysilane, methoxymethyldimethoxysilane, and 1-methoxyethyldimethoxysilane (HSi(CH(OCH₃)CH₃)(OCH₃)₂) are more preferred.

The method for producing the alkoxyhydrosilane compound (A) of the present invention is characterized by including a reaction of a halohydrosilane compound (B) represented by formula (1):

H-SiR²_{c}(CR¹_{3-b}Y_{b})ₐX_{3-a-c} (1)

wherein each R¹ is independently a hydrogen atom or substituted or unsubstituted C₁₋₂₀ hydrocarbon group; each R² is independently a substituted or unsubstituted C₁₋₂₀ hydrocarbon group; each X is independently a halogen atom; Y is selected from a halogen atom, -OR³, -NR⁴R⁵, -N=R⁶ -SR⁷ (wherein R³, R⁴, R⁵, and R⁷ are each a hydrogen atom or C₁₋₂₀ substituted or unsubstituted hydrocarbon group, and R⁶ is a divalent C₁₋₂₀ substituted or unsubstituted hydrocarbon group), a C₁₋₂₀ perfluoroalkyl group, and a cyano group; a is 1 or 2, b is 1, 2 or 3, and c is 1 or 0, provided that a+c is not more than 2,
with an orthoester (C) represented by formula (2):

R⁹-C-(OR⁸)₃ (2)

wherein R⁸s are substituted or unsubstituted C₁₋₂₀ hydrocarbon groups, and R⁹ is hydrogen or a substituted or unsubstituted hydrocarbon group, at a molar ratio of the orthoester (C) to Xs of the halohydrosilane (B) of constantly not less than 1.

As described above, if the halohydrosilane (B) is alkoxylated only with alcohol, the target alkoxyhydrosilane (A) cannot be obtained efficiently due to the side reaction. The document WO 2010/004948 has already disclosed that an alkoxyhydrosilane (A) can be produced using only an orthoester. The reaction between a chlorosilane and an orthoester is an exothermic reaction. For example, if trimethyl orthoformate is used, methyl chloride and methyl formate are generated as by-products. Thus, when the reaction is performed on a large scale, controlling the amounts of reaction heat and of evolved gas is required. However, if the addition rate of the orthoester is reduced to control the reaction, a side reaction is likely to proceed, as in the case of using only alcohol. This results not only in reduction in the yield of the target product, but also a need for using an excessive amount of the orthoester to complete the reaction, which is economically disadvantageous. In this context, the present inventors have found that, even in a large scale reaction, when the molar ratio of the orthoester (C) to the halosilyl groups of the halohydrosilane (B) is constantly set to not less than 1, the alkoxyhydrosilane (A) can be produced safely and efficiently by controlling the amounts of reaction heat and evolved gas.

In order to constantly set the molar ratio of the orthoester (C) to the halosilyl groups of the halohydrosilane (B) to not less than 1, a method including adding the halohydrosilane (B) to the orthoester (C) is preferred. The amount of the orthoester (C) to be used here is required to be 1 molar equivalent or more relative to the amount of halosilyl groups calculated from the initial total amount of the charged halohydrosilane (B). The amount of the orthoester (C) is preferably 1.05 molar equivalents or more, and more preferably 1.2 molar equivalents or more. The upper limit thereof is preferably 5 molar equivalents or less, and more preferably 2 molar equivalents or less. In that method, by reducing the addition rate of the halohydrosilane (B), the amounts of reaction heat and evolved gas can be controlled. Furthermore, a side reaction which occurs when the orthoester (C) is slowly added to the halohydrosilane (B) hardly occurs in that method.

The lower limit of the reaction temperature is preferably 0°C, more preferably 20°C, further preferably 40°C, and especially preferably 50°C. The upper limit is preferably 100°C, more preferably 80°C, and especially preferably 70°C. If the reaction temperature is lower than the lower limit, the reactivity tends to be reduced so that the reaction is less likely to be completed. In addition, a side reaction is also more likely to proceed. Also if the reaction temperature is higher than the upper limit, the hydrosilyl group is likely to be degraded unfavorably.

The reaction time should be suitably set according to the capacity of equipment for controlling the amounts of evolved gas and heat, and is preferably 30 minutes to 6 hours, and more preferably 1 to 3 hours, from the viewpoint of productivity.

X of the halohydrosilane (B) is any one of the following halogen atoms: fluorine, chlorine, bromine, and iodine. Chlorine is preferred because of easy availability.

Examples of R⁹ of the orthoester (C) include, but not limited to, hydrogen, a methyl group, an ethyl group, and a phenyl group. R⁹ is preferably hydrogen or a methyl group because such compounds are easily available and have high activity. A methyl group is preferred because such compounds have especially high activity.

Specific examples of the orthoester include, but are not limited to, trimethyl orthoformate, triethyl orthoformate, triisopropyl orthoformate, trimethyl orthoacetate, triethyl orthoacetate, trimethyl orthopropionate, and trimethyl orthobenzoate. From the viewpoint of availability, trimethyl orthoformate, triethyl orthoformate, and trimethyl orthoacetate are preferred, and trimethyl orthoformate and trimethyl orthoacetate are more preferred. From the viewpoint of high reactivity, trimethyl orthoformate, triethyl orthoformate, trimethyl orthoacetate, and triethyl orthoacetate are preferred, and trimethyl orthoacetate is most preferred.

In the method for producing a silane compound according to the present invention, a solvent may be used.

The reaction can be performed in any atmosphere, and is preferably performed in an atmosphere such as dry air, nitrogen, argon, or the like. Dry nitrogen is more preferred because it is easy to manage and is also economical.

The alkoxyhydrosilane (A) to be produced by the present invention can be used for, as described above, a hydrosilylation reaction using an Si-H group, hydrolysis and condensation reactions using an Si-OR⁸ group, and the like. Furthermore, the heteromethyl group of the alkoxyhydrosilane (A) can be used for conversion to another substituent and also can enhance the reactivity of a hydrolyzable group on the silicon. Also, when the chloromethyl group is allowed to react with Mg, the alkoxyhydrosilane can then be used as a Grignard reagent, as suggested in, for example, JP S59-148791 A and JP H02-270889 A.

Specific examples of uses of the alkoxyhydrosilane compound (A) include, but are not limited to, the following (1) and (2). (1) The alkoxyhydrosilane compound (A) is addition-reacted with an unsaturated group-containing compound via hydrosilylation to provide a reactive silyl group-containing compound having high hydrolyzability. For example, 3-chloropropyl(chloromethyl)dimethoxysilane can be obtained by addition-reacting chloromethyldimethoxysilane with allyl chloride via hydrosilylation. This product can be used as a so-called silane coupling agent or a material for silane coupling agents, which has both a hydrolyzable silyl group and another reactive group. The silane coupling agent thus obtained is considered to exhibit higher hydrolyzability due to the heteromethyl group on the silicon. Alternatively, the unsaturated group-containing compound may be a polymeric compound. For example, if the alkoxyhydrosilane (A) produced by the method of the present invention is used for introduction of a reactive silyl group to prepare a reactive silyl group-containing polymer as disclosed in JP S52-73998 A or the like, the obtained reactive silyl group-containing polymer has very high reactivity and good handleability. The reactive silyl group-containing polymer can be suitably used for sealing materials and adhesives. (2) A hydrolyzable silyl group-containing compound obtained in the same manner as in (1) is converted into a siloxane compound by hydrolysis and condensation reactions. Then, the halomethyl group is converted to a desired substituent (for example, the chloromethyl group can be converted to a diethylaminomethyl group) by nucleophilic substitution or the like reaction.

The Si-H, Si-OR⁸, and heteromethyl groups of the alkoxyhydrosilane compound (A) can be used in any order.

### EXAMPLES

Chloromethyldichlorosilane used in examples was synthesized based on the production method disclosed in Example 41 of WO 2010/004948.

### (Comparative Example 1)

Boiling chips were put in a reactor, and the air in the reactor was replaced with dry nitrogen. The reactor was then charged with 100 mmol of chloromethyldichlorosilane, and the temperature was maintained at around 50°C. Then, 1.2 molar equivalents of trimethyl orthoformate (produced by Wako Pure Chemical Industries, Ltd.) was added using a syringe pump at an addition rate of 0.080 molar equivalents/min relative to the Si-Cl of the chloromethyldichlorosilane. After completion of the addition, the NMR spectrum of the reaction mixture was measured. The results show that the proportion of chloromethyldimethoxysilane (ClCH₂Si(OCH₃)₂H) formed was 64 mol%, and that of chloromethyltrimethoxysilane (ClCH₂Si(OCH₃)₃) formed was 6 mol%, and at the same time, chloromethylchloromethoxysilane (ClCH₂SiCl (OCH₃) H) (7 mol%),
chloromethyldichloromethoxysilane (ClCH₂SiCl₂(OCH₃)) (17 mol%) and other chlorosilanes remained.

### (Example 1)

Boiling chips were put in a reactor, and the air in the reactor was replaced with dry nitrogen. The reactor was then charged with 400 mmol of trimethyl orthoformate (produced by Wako Pure Chemical Industries, Ltd.), and the temperature was maintained at around 70°C. Then, 150 mmol of chloromethyldichlorosilane was added into the liquid of trimethyl orthoformate using a syringe pump over about 60 minutes. 60 minutes after completion of the addition, the NMR spectrum of the reaction mixture was measured. The results show that the proportion of chloromethyldimethoxysilane (ClCH₂Si(OCH₃)₂H) formed was 97 mol%, and that of chloromethyltrimethoxysilane (ClCH₂Si(OCH₃)₃) formed was 3 mol%.

### (Example 2)

Boiling chips were put into a reactor, and the air in the reactor was replaced with dry nitrogen. The reactor was then charged with 850 mmol of trimethyl orthoacetate (produced by Wako Pure Chemical Industries Co., Ltd.), and the temperature was maintained at around 60°C. Then, 400 mmol of chloromethyldichlorosilane was added into the liquid of trimethyl orthoacetate using a syringe pump over about 120 minutes. 10 minutes after completion of the addition, the NMR spectrum of the reaction mixture was measured. The results show that the proportion of chloromethyldimethoxysilane (ClCH₂Si(OCH₃)₂H) formed was 98 mol%, and that of chloromethyltrimethoxysilane (ClCH₂Si(OCH₃)₃) formed was 2 mol%.

### (Example 3)

Methoxymethyltrimethoxysilane was prepared based on the method disclosed in Example 2 of JP 2007-513203 T. Then, the methoxymethyltrimethoxysilane was allowed to react with 4 molar equivalents of acetyl chloride in the presence of 0.02 molar equivalents of zinc chloride as a catalyst. The mixture was reacted for 36 hours while being heated at reflux, to synthesize methoxymethyltrichlorosilane

The methoxymethyltrichlorosilane was purified by distillation, and mixed with 1 molar equivalent of methyldichlorosilane. Then, 0.05 molar equivalents of methyltributylammonium chloride was added to the mixture, and the resultant mixture was reacted for 3 hours while being heated at reflux, to yield methoxymethyldichlorosilane at a conversion rate of about 50%.

Boiling chips were put in a reactor, and the air in the reactor was replaced with dry nitrogen. The reactor was then charged with 1 mol of trimethyl orthoacetate (produced by Wako Pure Chemical Industries, Ltd.), and the temperature was maintained at around 50°C. Then, 400 mmol of the methoxymethyldichlorosilane purified by distillation was added into the liquid of trimethyl orthoacetate using a syringe pump over about 120 minutes. 10 minutes after completion of the addition, the NMR spectrum of the reaction mixture was measured. The results show that the proportion of methoxymethyldimethoxysilane (CH₃OCH₂Si(OCH₃)₂H) formed was 98 mol%, and that of methoxymethyltrimethoxysilane (CH₃OCH₂Si(OCH₃)₃) formed was 2 mol%.

### INDUSTRIAL APPLICABILITY

The alkoxyhydrosilane (A) to be produced by the method of the present invention can be used for a hydrosilylation reaction using an Si-H group, hydrolysis and condensation reactions using an Si-OR⁸ group, and the like. Furthermore, the heteromethyl group of the alkoxyhydrosilane (A) can be used for conversion to another substituent and also can enhance the reactivity of a hydrolyzable group on the silicon. Also, when the chloromethyl group is allowed to react with Mg, the alkoxyhydrosilane (A) can then be used as a Grignard reagent, as suggested in, for example, JP S59-148791 A and JP H02-270889 A.

## Claims

1. A method for producing an alkoxyhydrosilane (A), comprising
a reaction of a halohydrosilane (B) represented by formula (1):
H-SiR²_{c}(CR¹_{3-b}Y_{b})ₐX_{3-a-c} (1)
wherein each R¹ is independently a hydrogen atom or substituted or unsubstituted C₁₋₂₀ hydrocarbon group; each R² is independently a substituted or unsubstituted C₁₋₂₀ hydrocarbon group; each X is independently a halogen atom; Y is selected from a halogen atom, -OR³, -NR⁴R⁵, -N=R⁶, -SR⁷ (wherein R³, R⁴, R⁵, and R⁷ are each a hydrogen atom or C₁₋₂₀ substituted or unsubstituted hydrocarbon group, and R⁶ is a divalent C₁₋₂₀ substituted or unsubstituted hydrocarbon group), a C₁₋₂₀ perfluoroalkyl group, and a cyano group; a is 1 or 2, b is 1, 2 or 3, and c is 1 or 0, provided that a+c is not more than 2,
with an orthoester (C) represented by formula (2):
R⁹-C-(OR⁸)₃ (2)
wherein R⁸s are substituted or unsubstituted C₁₋₂₀ hydrocarbon groups, and R⁹ is hydrogen or a substituted or unsubstituted hydrocarbon group, at a molar ratio of the orthoester (C) to Xs of the halohydrosilane (B) of constantly not less than 1, to produce the alkoxyhydrosilane (A) represented by formula (3):
H-SiR²_{c}(CR¹_{3-b}Y_{b})ₐ(OR⁸)_{3-a-c} (3)
wherein R¹, R², R⁸, Y, a, b, and c are as defined above,
and wherein the halohydrosilane (B) is added to the orthoester (C).

2. The method for producing the silane compound according to claim 1,
wherein X is a chloro group.

3. The method for producing the silane compound according to claim 1 or 2,
wherein Y is a halogen atom.

4. The method for producing the silane compound according to claim 1 or 2,
wherein the halohydrosilane (B) is chloromethyldichlorosilane (ClCH₂SiCl₂H).

5. The method for producing the silane compound according to claim 1 or 2,
wherein Y is an alkoxy group (-OR³).

6. The method for producing the silane compound according to claim 5,
wherein R³ is a substituted or unsubstituted C₁₋₅ hydrocarbon group.

7. The method for producing the silane compound according to claim 5,
wherein Y is a methoxy group.

8. The method for producing the silane compound according to any one of claims 1 to 7,
wherein R⁹ of the orthoester (C) is hydrogen or a methyl group.

## Patentansprüche

1. Verfahren zur Herstellung eines Alkoxyhydrosilans (A), umfassend
eine Reaktion eines Halohydrosilans (B) mit der Formel (1) :
H-SiR²_{c}(CR¹_{3-b}Y_{b})ₐX_{3-a-c} (1)
worin jedes R¹ unabhängig voneinander ein Wasserstoffatom oder eine substituierte oder unsubstituierte C₁₋₂₀-Kohlenwasserstoffgruppe ist; jedes R² unabhängig voneinander eine substituierte oder unsubstituierte C₁₋₂₀-Kohlenwasserstoffgruppe ist; jedes X unabhängig voneinander ein Halogenatom ist; Y aus einem Halogenatom, -OR³, -NR⁴R⁵, -N=R⁶, -SR⁷ (worin R³, R⁴, R⁵ und R⁷ jeweils ein Wasserstoffatom oder eine substituierte oder unsubstituierte C₁₋₂₀-Kohlenwasserstoffgruppe sind und R⁶ eine divalente substituierte oder unsubstituierte C₁₋₂₀-Kohlenwasserstoffgruppe ist), einer C₁₋₂₀-Perfluoralkylgruppe und einer Cyanogruppe ausgewählt ist; a 1 oder 2 ist, b 1, 2 oder 3 ist und c 1 oder 0 ist, mit der Maßgabe, dass a+c nicht mehr als 2 ist,
mit einem Orthoester (C) mit der Formel (2):
R⁹-C-(OR⁸)₃ (2)
worin die R⁸ substituierte oder unsubstituierte C₁₋₂₀-Kohlenwasserstoffgruppen sind und R⁹ Wasserstoff oder eine substituierte oder unsubstituierte Kohlenwasserstoffgruppe ist,
bei einem Molverhältnis des Orthoesters (C) zu den X des Halohydrosilans (B) von konstant nicht weniger als 1, um das Alkoxyhydrosilan (A) mit der Formel (3) herzustellen:
H-SiR²_{c}(CR¹_{3-b}Y_{b})ₐ(OR⁸)_{3-a-c} (3)
worin R¹, R², R⁸, Y, a, b und c wie oben definiert sind,
und wobei das Halohydrosilan (B) zu dem Orthoester (C) gegeben wird.

2. Verfahren zur Herstellung der Silanverbindung gemäß Anspruch 1, bei dem X eine Chlorgruppe ist.

3. Verfahren zur Herstellung der Silanverbindung gemäß Anspruch 1 oder 2, bei dem Y ein Halogenatom ist.

4. Verfahren zur Herstellung der Silanverbindung gemäß Anspruch 1 oder 2, bei dem das Halohydrosilan (B) Chlormethyldichlorsilan (ClCH₂SiCl₂H) ist.

5. Verfahren zur Herstellung der Silanverbindung gemäß Anspruch 1 oder 2, bei dem Y eine Alkoxygruppe (-OR³) ist.

6. Verfahren zur Herstellung der Silanverbindung gemäß Anspruch 5, bei dem R³ eine substituierte oder unsubstituierte C₁₋₅-Kohlenwasserstoffgruppe ist.

7. Verfahren zur Herstellung der Silanverbindung gemäß Anspruch 5, bei dem Y eine Methoxygruppe ist.

8. Verfahren zur Herstellung der Silanverbindung gemäß mindestens einem der Ansprüche 1 bis 7, bei dem R⁹ des Orthoesters (C) Wasserstoff oder eine Methylgruppe ist.

## Revendications

1. Procédé de production d'un alcoxyhydrosilane (A), comprenant
une réaction d'un halogénohydrosilane (B) représenté par la formule (1) :
H-SiR²_{c}(CR¹_{3-b}Y_{b})ₐX_{3-a-c} (1)
dans laquelle chaque R¹ est indépendamment un atome d'hydrogène ou un groupe hydrocarboné en C₁-C₂₀ substitué ou non substitué ; chaque R² est indépendamment un groupe hydrocarboné en C₁-C₂₀ substitué ou non substitué ; chaque X est indépendamment un atome d'halogène ; Y est choisi parmi un atome d'halogène, -OR³, -NR⁴R⁵, -N=R⁶, -SR⁷ (dans lesquels R³, R⁹, R⁵, et R⁷ sont chacun un atome d'hydrogène ou un groupe hydrocarboné substitué ou non substitué en C₁-C₂₀, et R⁶ est un groupe hydrocarboné substitué ou non substitué en C₁-C₂₀ divalent), un groupe perfluoroalkyle en C₁-C₂₀, et un groupe cyano ; a est 1 ou 2, b est 1, 2 ou 3, et c est 1 ou 0, sous réserve que a+c n'est pas supérieur à 2,
avec un orthoester (C) représenté par la formule (2) :
R⁹-C-(OR⁸)₃ (2)
dans laquelle les R⁸ sont des groupes hydrocarbonés en C₁-C₂₀ substitués ou non substitués, et R⁹ est un hydrogène ou un groupe hydrocarboné substitué ou non substitué, à hauteur d'un rapport molaire de l'orthoester (C) sur les X de l'halogénohydrosilane (B) de constamment pas moins de 1, pour produire l'alcoxyhydrosilane (A) représenté par la formule (3) :
H-SiR²_{c}(CR¹_{3-b}Y_{b})ₐ(OR⁸)_{3-a-c} (3)
dans laquelle R¹, R², R⁸, Y, a, b, et c sont comme définis ci-dessus,
et dans lequel l'halogénohydrosilane (B) est ajouté à l'orthoester (C).

2. Procédé de production du composé silane selon la revendication 1,
dans lequel X est un groupe chloro.

3. Procédé de production du composé silane selon la revendication 1 ou 2,
dans lequel Y est un atome d'halogène.

4. Procédé de production du composé silane selon la revendication 1 ou 2,
dans lequel l'halogénohydrosilane (B) est le chlorométhyldichlorosilane (ClCH₂SiCl₂H).

5. Procédé de production du composé silane selon la revendication 1 ou 2,
dans lequel Y est un groupe alcoxy (-OR³).

6. Procédé de production du composé silane selon la revendication 5,
dans lequel R³ est un groupe hydrocarboné en C₁-C₅ substitué ou non substitué.

7. Procédé de production du composé silane selon la revendication 5,
dans lequel Y est un groupe méthoxy.

8. Procédé de production du composé silane selon l'une quelconque des revendications 1 à 7,
dans lequel R⁹ de l'orthoester (C) est un hydrogène ou un groupe méthyle.
